# EUROPÄISCHE PATENTSCHRIFT

(11) **EP 2 253 500 B1**
(45) Veröffentlichungstag und Bekanntmachung des Hinweises auf die Patenterteilung: **10.07.2013**
(21) Anmeldenummer: 10004829.7
(22) Anmeldetag: 07.05.2010
(51) Int. Cl.: B60N 2/015

(54) **Vorrichtung zum temporären Verbinden eines bewegbaren Gegenstandes mit einer Halteschiene**
Device for temporary connection of a mobile object with a hold rail
Dispositif de liaison temporaire d'un objet en mouvement et d'un rail de fixation

(30) Priorität: 12.05.2009 DE 102009020874
(43) Veröffentlichungstag der Anmeldung: 24.11.2010
(73) Patentinhaber: Georg Fischer Metallverarbeitung GmbH, 89231 Neu-Ulm/Schwaighofen (DE)
(72) Erfinder: Fischer, Thomas, 89231 Neu-Ulm (DE)
(74) Vertreter: Sawodny, Michael-Wolfgang

(56) Entgegenhaltungen:
- EP-A1- 1 790 521
- DE-A1- 19 851 392

## Beschreibung

Die Erfindung betrifft eine Vorrichtung zum temporären Verbinden eines bewegbaren Gegenstandes, insbesondere eines Fahrzeugsitzes mit einer Halteschiene.

Die Erfindung betrifft insbesondere einen deartige Vorrichtung nach dem Oberbegriff des Ansprucchs 1, welche aus der DE 198 51 392 A1 bekannt ist.

Vorrichtungen zu temporären Befestigungen eines bewegbaren Gegenstandes, insbesondere eines Fahrzeugsitzes in einer Halteschiene sind aus einer Vielzahl von Anmeldungen bekannt geworden.

So zeigt die EP 1790521 A1 eine verstellbare Sitzhalterung, bei der lediglich ein axial verstellbarer Arretierbolzen mit Hilfe einer Hebeleinrichtung abgesenkt werden kann. Durch das Absenken des bzw. der Arretierbolzen in der EP 1 790 521 A1 wird eine Doppelfunktion übernommen. Zum einen greift der Arretierbolzen in eine entsprechende Arretieröffnung der Bodenschiene ein und sorgt für eine genaue Positionierung, zum anderen werden durch den Arretierbolzen die an der Unterseite der Fußplatte vorstehenden Führungsbolzen nach oben gezogen.

Ein Spannbolzen wird in der EP 1 790 521 A1 nicht gezeigt, lediglich ein Arretierbolzen mit einer Doppelfunktion.

Dadurch werden die Führungsbolzen gegen die Oberseite der Nut der Bodenschiene gedrückt. Nachteilig an einer derartigen Ausführungsform ist, dass die Fußplatte nicht mehr mit der Halteschiene zur Anlage kommt. Es besteht also ein Spalt zwischen Fußplatte und Boden.

Dies bedeutet, dass das von dem Stuhlfuß getragene Sitzgestell über ein gewisses Spiel verfügt. Ein weiterer Nachteil der Anordnung gemäß der EP 1 790 521 A1 ist, dass der Stuhlfuß und somit der Fahrzeugsitz nach oben, entgegen der Belastungsrichtung, verspannt wird. Das Gewicht des Fahrgastsitzes und das Gewicht des Fahrgastes wirken gegen die Spannkraft der federnden Platte und hebt diese teilweise auf. Durch den Spalt zwischen Schiene und Bodenplatte wird keine formschlüssige Verbindung erreicht.

Aus der EP 0993392 A1 ist eine Vorrichtung für eine schnell lösbare, verschiebbare und schnell arretierbare Befestigung eines Fahrzeugausrüstungsteils bekannt geworden, bei dem wenigstens zwei Spannelemente durch Schräg- oder Keilflächen in Richtung der Bodenschiene gezogen werden, so dass eine Klemmwirkung verursacht wird. Zusätzlich zu den Spannelementen ist auch eine Positioniereinrichtung vorgesehen. Eine Ausgestaltung einer Vorrichtung mit der die Positioniereinrichtung zusammen mit den Spannelementen betätigt werden kann, ist in der EP 0993392A1 nicht angegeben. Die Positioniereinrichtung selbst wird durch ein Federelement gehalten.

Die Betätigungseinrichtung der EP 0 993 392 A1 wird durch eine Anordnung gemäß der DE 198 51 392A weitergebildet. Bei der Anordnung gemäß der DE 198 51 392A wird zur Betätigung wiederum ein durch Federn gehaltener Arretierbolzen eingesetzt, der über eine Kulissenscheibe und Steuerkurven die Klemmstifte ansteuert. Eine derartige Kulissensteuerung weist einen komplizierten und aufwendigen Aufbau auf. Die Klemmstifte gemäß der DE 198 51 392A werden wiederum mit Federn gelagert. Zwar kann durch die Klemmstifte ein spielfreies Verspannen mit der Bodenschiene erreicht werden, jedoch handelt es sich um kein form- und kraftschlüssiges Anliegen der Klemmstifte an der Bodenschiene. Im Belastungsfall kann beispielsweise die Vorrichtung gegen die Federkraft der Federn angehoben werden, wodurch Klappergeräusche entstehen können. Des Weiteren werden zum spielfreien Verspannen eine Vielzahl von Spannbolzen benötigt.

Aufgabe der Erfindung ist es somit, die Nachteile des vorgenannten Standes der Technik zu vermeiden und eine einfache und schnell lösbare Anordnung anzugeben, mit dem eine sichere und schnelle Halterung erreicht wird.

Erfindungsgemäß wird diese Aufgabe durch eine Vorrichtung gemäß Anspruch 1 gelöst. Die Vorrichtung zum zeitweiligen, d.h. zum temporären Verbinden eines bewegbaren Gegenstandes, insbesondere eines Fahrzeugsitzes, mit einer Längsnuten aufweisenden Halteschiene umfasst mehrere nach unten ragende Führungsbolzen, die in der Halteschiene geführt werden sowie einen axial verschiebbaren Arretierbolzen und einen axial verschiebbaren Spannbolzen, in Abstand zum Arretierbolzen zum Eingriff in die Halteschiene. Der Arretierbolzen und der Spannbolzen sind durch eine Hebeleinrichtung gemeinsam axial verstellbar.

Auch die EP 1 892 142 A1 zeigt eine Vorrichtung mit einer aufwendigen Kulissensteuerung mit kompliziertem Aufbau sowie Federn am Arretierbolzen analog zum Aufbau wie in der DE 198 51 392 A.

Eine weitere Schrift, die eine Einrichtung zum lösbaren Verbinden eines Sitzes zeigt, ist die DE 10 2005 023007 B3. Anstelle eines Arretierbolzens wird bei der DE 10 2005 023007 B3 ein Rastblech eingesetzt. Bei der DE 10 2005 023007 B3 erfolgt die Verspannung wiederum mit Hilfe der Führungsbolzen, indem ein Verriegelbalken angehoben und abgesenkt wird.

Erfindungsgemäß umfasst die Hebeleinrichtung einen um einen Drehpunkt verschwenkbaren Hebelarm. Der Hebelarm lenkt über Anlenkachsen den in axialer Richtung verschiebbaren Arretierbolzen und den Spannbolzen an. Die Anlenkachse für den Arretierbolzen ist vor dem Drehpunkt und die Anlenkachse für den Spannbolzen hinter dem Drehpunkt des Hebelarms angeordnet. Mit Hilfe des Hebelarmes werden Arretierbolzen und Spannbolzen in entgegen gesetzte Richtungen bewegt. Der Hebelarm wirkt vorliegend als zweiseitiger Hebel. Durch das Absenken und gleichzeitige Anziehen wird bei der Erfindung eine besonders feste Verspannung erreicht, da der Spannbolzen kraft- und formschlüssig mit der T-förmigen Nut der Halteschiene verspannt wird. Die Vorrichtung wird nach unten gegen die Schiene verspannt. Das Gewicht des Fahrgastsitzes und des Fahrgastes wirkt bei der erfindungsgemäßen Vorrichtung nicht gegen die Spannkraft, wie im Stand der Technik, z. B. bei der EP 1 790 521 A.

In einer bevorzugten Ausführungsform ist die Vorrichtung derart ausgestaltet, dass im Fall der Arretierung der Spannbolzen form- und kraftschlüssig an den Längsnuten der Halteschiene anliegt und die Führungsbolzen einen Abstand zu den Längsnuten der Halteschiene aufweisen.

Vorteilhafterweise erfolgt bei einer derartigen Ausgestaltung die Verspannung lediglich mittels des Spannbolzens und einem Tellerteil. Der bzw. die Führungsbolzen dienen im unbelasteten Fall lediglich der Führung des Arretierprofils in der Halteschiene, da sie einen Abstand zur Nut der Halteschiene aufweisen. Nur im Fall eines Aufpralles, bei der beispielsweise das Stuhlgestell nach vorne kippt, kommen bei dieser Ausführungsform die Führungsbolzen mit der Nut zur Anlage und verhindern so ein Ausreißen des in der Führungsnut gehaltenen Gegenstandes, hier des Fahrgastsitzes.

In einer besonders bevorzugten Ausführungsform ist die Hebeleinrichtung derart ausgestaltet, dass sowohl die Verriegelung wie auch die Entriegelung der Vorrichtung zum zeitweiligen, d.h. zum temporären Verbinden eines bewegbaren Gegenstandes nur durch eine Fußbetätigung möglich ist. Dies ist gegenüber sämtlichen aus dem Stand der Technik bekannten Einrichtungen zum temporären Verbinden eines bewegbaren Gegenstandes ein Vorteil, da bei diesen Einrichtungen das Verriegeln und Entriegeln nur dadurch möglich war, dass eine Bedienperson sich gebückt hat, wohingegen bei der erfindungsgemäßen Vorrichtung das Ver- und Entriegeln in stehender Position alleine mit dem Fuß erfolgen kann.

Gemäß einer weitergebildeten Ausführungsform der Erfindung ist die nur mittels eines Fußes betätigbare Hebeleinrichtung so ausgebildet, dass diese gegen unbeabsichtigtes Lösen gesichert ist. Bevorzugt wird hierfür ein Schließblech eingesetzt. Um die Hebeleinrichtung aus einem geschlossenen Zustand zu lösen, kann die Vorrichtung so ausgestaltet sein, dass es hierfür erforderlich ist, gleichzeitig eine Kraft nach unten und zur Seite auszuüben. Eine solche Anordnung hat den Vorteil, dass es nur durch Hinabdrücken eines Fußhebels nicht zum Lösen der Verriegelung kommen kann.

Neben einer Verriegelung und Entriegelung durch eine Fußbetätigung kann die Verriegelung und Entriegelung auch mit anderen Vorrichtungen, beispielsweise einem Hebel oder einem Griffstück mit federbelastetem Druckknopf, der in eine Bohrung beispielsweise an einer Stütze eingerastet werden kann, vorgenommen werden. Durch das Einrasten des Druckknopfes in die Bohrung der Stütze kann die Hebeleinrichtung gemäß der Erfindung in der Verriegelungsstellung fixiert werden.

Wie zuvor beschrieben, hat die Verwendung eines zweiseitigen Hebels, der sowohl den Spannbolzen nach oben, wie den Arretierbolzen nach unten bewegt, den Vorteil, dass er wesentlich einfacher ausgestaltet ist als die komplizierte, aus der DE 198 51 392A1 bekannt gewordene Kulissensteuerung. Ein weiterer Vorteil ist es, dass sowohl die Spannbolzen wie die Führungs- und Arretierbolzen nicht federnd in einem Arretierprofil angeordnet sind, sondern starr. Hierdurch ist es möglich, dass der Fahrzeugsitz, der an der Vorrichtung angeordnet sein kann, spielfrei sowie form- und kraftschlüssig mit der Bodenschiene verspannt wird. Insbesondere werden Klappergeräusche, wie sie durch ein Anheben gegen die Federkraft der Feder bei der Vorrichtung gemäß der DE 198 51 392 A1 auftreten können, vermieden.

Gegenüber der EP 0 993 392 wird die federnde Absenkung des Arretierbolzens vermieden und insbesondere eine einfache Anordnung angegeben, mit dem sowohl der Arretierbolzen wie auch der Spannbolzen gemeinsam bewegt werden kann. Bei der EP 0 993 392 wird das Verspannen mit einer Vielzahl von Spannbolzen erreicht, wohingegen bei der erfinderischen Lösung die Verspannung mit einem einzigen Spannbolzen je Arretierprofil erreicht wird.

Gegenüber der EP 1 790 521 A1 wird durch das Absenken und gleichzeitige Anziehen der Spannbolzen eine feste Verspannung erreicht. Insbesondere kann ein mit dem Arretierprofil verbundener Gegenstand, beispielsweise eine Sitzbank spielfrei gegen die Bodenplatte gezogen und verspannt werden..

Wie zuvor beschrieben, werden Arretierbolzen und Spannbolzen gemäß der Erfindung mit der Hebeleinrichtung in entgegengesetzte Richtungen bewegt. Gemäß der Erfindung ist die Hebeleinrichtung so ausgebildet, dass, befindet sich der Hebel in einer geöffneten Stellung, der Arretierbolzen angehoben und der Spannbolzen abgesenkt sind. Wird der Hebel aus der geöffneten Stellung nach unten verbracht, z. B. durch Absenken, so wird der Arretierbolzen nach unten bewegt und gleichzeitig der Spannbolzen nach oben gezogen, bis er an der Halteschiene anliegt und eine kraft- und formschlüssige Verbindung zur Verfügung stellt.

Bevorzugt umfasst die Vorrichtung ein Arretierprofil mit Aufnahmen, wobei eine Aufnahme den Arretierbolzen und eine andere Aufnahme den Spannbolzen aufnimmt und der Arretierbolzen und der Spannbolzen in der jeweiligen Aufnahme axial bewegbar ist.

Bevorzugt ist die Hebeleinrichtung mit einem um einen Drehpunkt verschwenkbaren Hebelarm ausgestaltet. Um den Hebelarm leichter aus der Offen-Stellung in die geschlossene Stellung absenken zu können und insbesondere die notwendigen Verspannkräfte aufzubringen, mit denen ein formschlüssiges Verspannen des Spannbolzens in der Halteschiene erfolgt, ist vorgesehen, dass der Hebelarm ein Bedienpedal umfasst.

In einer bevorzugten Ausgestaltung lenkt der Hebelarm über Anlenkachsen den in axialer Richtung verschiebbaren Spannbolzen und den Arretierbolzen an. Die Anlenkachsen können den Spannbolzen und den Arretierbolzen in einem Langloch bewegen. Wird der Bedienhebel zum Verspannen nach unten bewegt, so bewegt sich die Anlenkachse des Arretierbolzens beispielsweise im Langloch nach unten, und die Anlenkachse des Spannbolzens im Langloch nach oben. Die Anlenkachse für den Arretierbolzen ist in der Regel vor dem Drehpunkt des Hebelarms, die Anlenkachse des Spannbolzens hinter dem Drehpunkt des Hebelarms angeordnet. Wird der Hebel nun von oben nach unten um die Drehachse bewegt, so stellen sich die zuvor beschriebenen Bewegungen ein, d. h. der Arretierbolzen wird nach unten verbracht, der Spannbolzen nach oben. Die Bewegung von Arretierbolzen und Spannbolzen erfolgt bevorzugt in axialer Richtung in Aufnahmen, die beispielsweise in das Arretierprofil eingelassen sein können.

Wie zuvor ausgeführt, ist der Hebelarm derart ausgebildet, dass er in eine arretierte Stellung verbracht werden kann, bei der der Spannbolzen kraft- und formschlüssig mit der Halteschiene verspannt wird. Bevorzugt umfasst die Vorrichtung eine Schließ- bzw. Fixiereinrichtung, die den Hebelarm in der arretierten Stellung fixiert. Bei der Fixiereinrichtung handelt es sich bevorzugt um ein Schließblech mit einem oberen Anschlag, an dem der Hebel in der arretierten Stellung anliegt. Der Anschlag nimmt dann die Gegenkraft zur Spannkraft in der arretierten Stellung auf.

Die Vorrichtung umfasst insbesondere ein Arretierprofil. Das Arretierprofil umfasst nach unten abstehende Führungsbolzen sowie eine Aufnahme für den Arretierbolzen und eine Aufnahme für den Spannbolzen. Arretier- und Spannbolzen können in der jeweiligen Aufnahme axial bewegt werden. Das Arretierprofil liegt in der verspannten Stellung an der Halteschiene an. Um den Arretierbolzen in der geöffneten Stellung des Hebels sicher oberhalb der Halteschiene zu halten, kann in einer Ausgestaltung der Erfindung vorgesehen sein, dass der Arretierbolzen einen Sprengring umfasst. Wird der Hebearm nur leicht in Richtung der geschlossenen Stellung nach unten bewegt, so gibt der Sprengring den Arretierbolzen frei. Der Arretierbolzen fällt dann durch sein Eigengewicht und das des Hebels nach unten und taucht in eine Bohrung der Halteschiene ein. Auch andere Möglichkeiten, um den Arretierbolzen in der geöffneten Stellung des Hebels sicher oberhalb der Halteschiene zu halten, sind denkbar.

Um die Vorrichtung entlang der Halteschiene leicht bewegen zu können, ist vorgesehen, dass die Vorrichtung eine Gleiteinrichtung, beispielsweise nach unten ragende Gleitringe, umfasst. Die Breite der Gleitringe bzw. Gleitelemente entspricht praktisch der Breite des Arretierprofiles.

In einer bevorzugten Ausgestaltung kann vorgesehen sein, dass das Arretierprofil eine Rolle, insbesondere eine Transportrolle, aufnimmt. Hierzu kann bevorzugt ein Ende des Arretierprofils zur Aufnahme einer Transportrolle gabelförmig ausgebildet sein. Mit der Transportrolle können mehrere Probleme gelöst werden. So ist es möglich, die Vorrichtung mit dem Stuhlfuß und den hieran angeschraubten Fahrzeugsitzen in einem nicht verankerten Zustand, d.h. insbesondere in einem nicht verbundenen Zustand, mit der Halteschiene auf einfache Art und Weise zu transportieren.

Des Weiteren kann der Abstand der Transportrolle von den an dem Arretierprofil angeordneten Führungsbolzen so gewählt sein, dass die Transportrolle in einer Öffnung der Halteschiene eingreift, sodann die Vorrichtung mit dem Arretierprofil um die Achse der Transportrolle herum verschwenkt wird, wobei aufgrund der Lage der Transportrolle relativ zu den Führungsbolzen beim Verschwenken die Führungsbolzen in die jeweiligen Öffnungen versenkt werden können. Die Transportrolle übernimmt somit eine Indexierung oder Suchfunktion.

In einer besonders bevorzugten Ausführungsform ist der bewegbare Gegenstand, der temporär durch die erfindungsgemäße Vorrichtung in der Halteschiene verankert wird, ein Fahrzeugsitz. Besonders bevorzugt ist es, wenn das Stuhlfußoberteil lösbar mit dem Arretierprofil verbunden ist und nicht, wie bislang, fest, beispielsweise durch Schweißen.

Ganz besonders bevorzugt ist es, wenn das Stuhlfußoberteil als gekantetes U- oder C-förmiges Blechteil einstückig ausgebildet ist.

Nachfolgend soll die Erfindung anhand der Figuren beispielhaft, ohne hierauf beschränkt zu sein, beschrieben werden.

Es zeigen:
- Fig. 1: erfindungsgemäße Vorrichtung mit einem Stuhlfußoberteil zur Aufnahme eines Fahrgastsitzes;
- Fig. 2a-2b: Fahrgastsitz mit unterschiedlichen Stuhlfüßen;
- Fig. 3a: Detailansicht eines Zentralstuhlfußes;
- Fig. 3b: Detailansicht eines Einzelstuhlfußes;
- Fig. 4: Draufsicht auf eine Halteschiene;
- Fig. 5a: Detailansicht eines Arretierprofils in geöffneter Hebelstellung (kein Verspannen);
- Fig. 5b: Detailansicht eines Arretierprofils in geschlossener Hebelstellung (Verspannen);
- Fig.6a-6b: Herstellen eines gekanteten Profiles gem. Fig. 7a-7c
- Fig. 7a-7b: gekantetes Profil für ein Stuhlfußoberteil.c
- Fig. 8a-8b: Ansicht eines Arretierprofiles mit einer Transportrolle

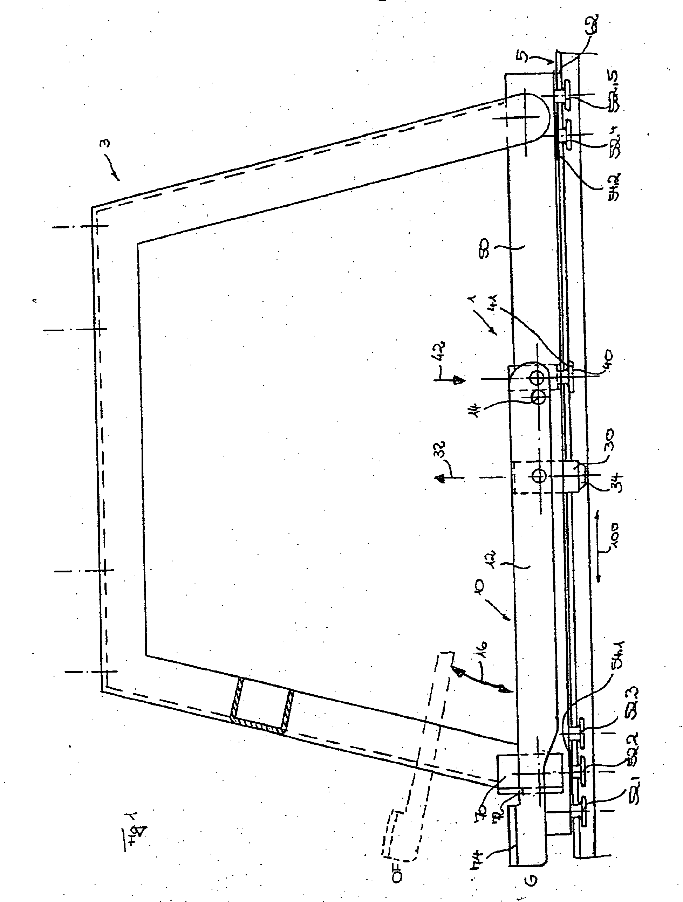

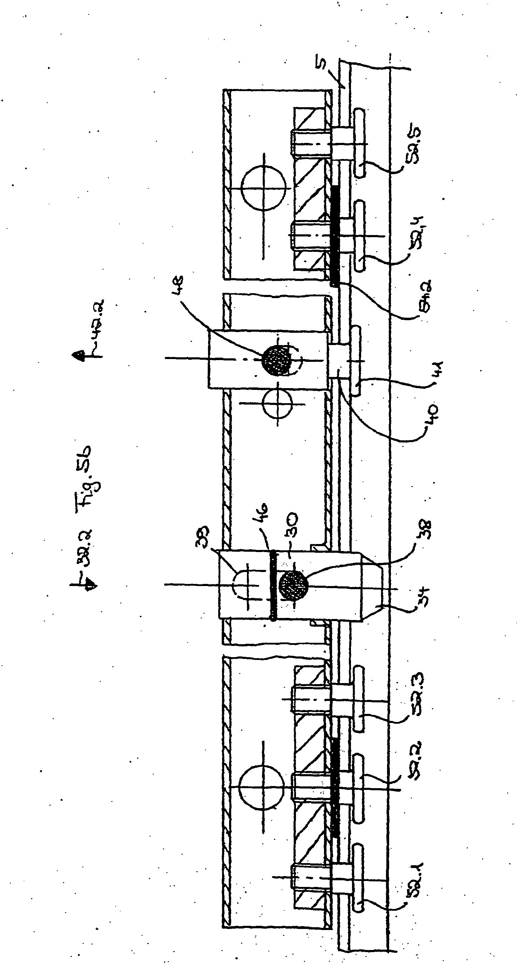

In Figur 1 ist in einer Übersicht eine erfindungsgemäße Vorrichtung 1 dargestellt. Die erfindungsgemäße Vorrichtung 1 dient zum temporären Verbinden eines bewegbaren Gegenstandes 3 mit einer Halteschiene 5. Die in Figur 1 dargestellte Vorrichtung 1 ist in die verspannte Stellung verbracht, wie detailliert in Figur 5b dargestellt. Die erfindungsgemäße Vorrichtung 1 umfasst eine erfindungsgemäße Hebeleinrichtung 10, die als Hebelarm 12 ausgeführt ist. Der Hebelarm 12 kann um einen Drehpunkt 14 verschwenkt werden, und zwar aus einer nur mit Strichlinien dargestellten geöffneten Stellung OF, bei der die Vorrichtung 1 nicht mit der Halteschiene 5 verspannt ist, in eine geschlossene Stellung G, bei der die Vorrichtung 1 mit der Halteschiene verspannt ist. Die Schwenkbewegung findet entlang des Pfeils 16 statt.

Erfindungsgemäß wird mit dem Hebelarm 12 sowohl ein Arretierbolzen 30 in axialer Richtung 32, wie auch ein Spannbolzen 40 in axialer Richtung 42 hin und her bewegt. Des Weiteren ist dargestellt in Figur 1 das Arretierprofil 50, das in der Halteschiene 5 mit Hilfe der nach unten von dem Arretierprofil ragenden Führungsbolzen 52.1, 52.2, 52.3, 52.4, 52.5 geführt wird und entlang der Halteschiene in axialer Richtung 100 bewegt werden kann. Um die Bewegung in axialer Richtung 100 entlang der Halteschiene zu unterstützen, sind Gleitelemente 54.1, 54.2 vorgesehen. Die Gleitelemente 54.1, 54.2 sind bevorzugt aus Kunststoff ausgebildet und erstrecken sich über die gesamte Breite des Arretierprofiles 50.

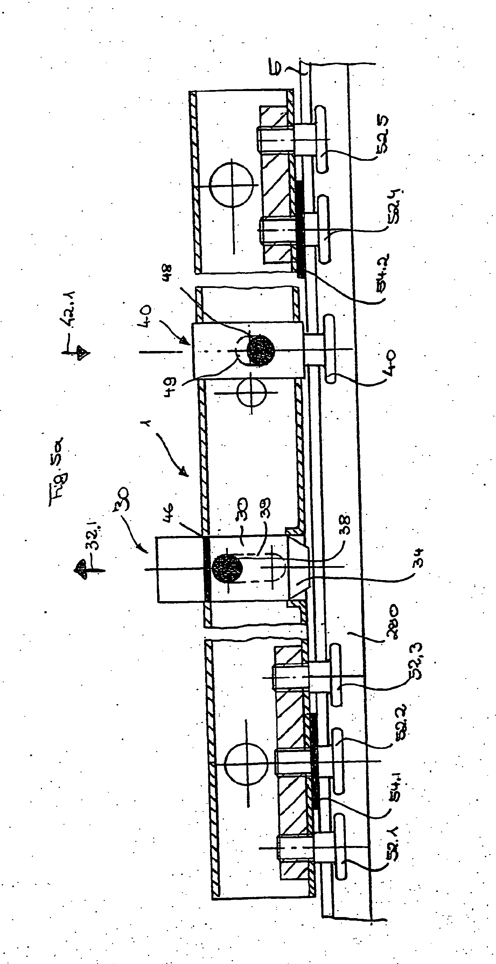

Wird der Hebel aus der offenen Position OF in die in Figur 1 dargestellte geschlossene Position verbracht, so fällt zunächst der Arretierbolzen 30 aufgrund seines Eigengewichtes und aufgrund des Hebels, der nach unten geführt wird, in eine Arretierbohrung. Um das Einfädeln des Arretierbolzens in die Arretierbohrung auch bei leichtem Versatz zu gewährleisten und zu vereinfachen, wird der Arretierbolzen bevorzugt mit einer Fase 34 versehen. Der Arretierbolzen gleitet in axialer Richtung 32 in einer Aufnahme des Arretierprofils 50, wie in den Figuren 5a und 5b gezeigt.

Wie aus Figur 1 hervorgeht, die den verspannten Zustand der Arretiervorrichtung zeigt, liegt lediglich der Spannbolzen 40 mit einem Tellerteil 41 an der Unterseite der in die Halteschiene 5 eingelassenen Nut an und verspannt form- und kraftschlüssig das Arretierprofil mit der Halteschiene 5. Zu beachten ist, dass die Verspannung lediglich mittels des Spannbolzens 40 und dem Tellerteil 41 erfolgt, wohingegen die Führungsbolzen 52.1, 52.2, 52.3, 52.4, 52.5 in unbelastetem Fall lediglich der Führung des Arretierprofils in der Halteschiene dienen und einen Abstand zur Nut 62 der Halteschiene 5 aufweisen. Nur im Fall eines Aufpralles, bei der beispielsweise das Stuhlgestell nach vorne kippt, kommen die Führungsbolzen mit der Nut 62 zur Anlage und verhindern so ein Ausreißen des in der Führungsnut gehaltenen Gegenstandes, hier des Fahrgastsitzes.

Um den Hebel 12 im verspannten Zustand zu sichern, ist als Sicherungseinrichtung eine an dem Stuhlgestell 3 angeordnete Fixiereinrichtung 70 in Form eines Schließbleches vorgesehen. Die Fixiereinrichtung weist einen Anschlag 72 auf, an dem der Hebelarm 12 anliegt, so dass ein Lösen der Verspannung des Spannbolzens 40 mit der Halteschiene vermieden wird. Weiter deutlich zu erkennen ist das am Hebel 12 angeordnete Bedienpedal 74, das dazu dient, den Hebel 12 einfach aus der Offen-Stellung OF in die geschlossene Stellung (G-Stellung) zu bewegen und in die nicht dargestellte Hintergreifung mit Anschlag 72 zu drücken.

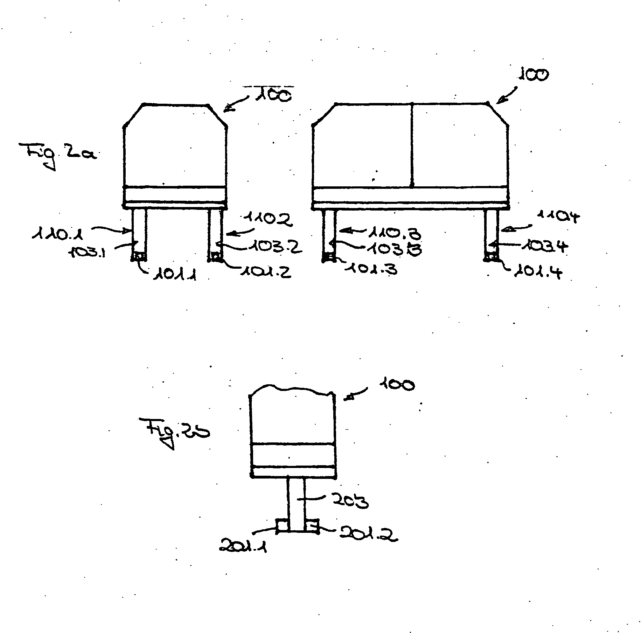

Die Gegenkraft zur Verspannkraft des Bolzens 40 mit der Halteschiene wird durch den Anschlag 72 der Fixiereinrichtung aufgenommen. Das dargestellte Stuhlfußoberteil 3 kann beispielsweise einen Fahrgastsitz, wie in den Figuren 2a und 2b dargestellt, aufnehmen. Ganz wichtig bei der Vorrichtung zum temporären Verbinden ist, dass im Gegensatz zu der EP 1 790 521 A1 der Arretierbolzen nicht nach unten auf den Boden verspannt wird, d.h. der Arretierbolzen ist vorliegend kräftefrei.

In der Figur 2a ist eine Ausführungsform der Erfindung gezeigt, bei der je zwei Stuhlfüße (Einzelfüße) pro Sitz oder Sitzbank 100, eingesetzt werden. Die Stuhlfüße 110.1, 110.2, 110.3, 110.4 umfassen jeweils ein Stuhlfußoberteil 103.1, 103.2, 103.3, 103.4 sowie mit dem Stuhlfußoberteil verbundene Vorrichtungen, hier Arretierprofile 101.1, 101.2, 101.3, 101.4 zum temporären Verbinden mit einer Halteschiene. Die Bauteile 103.1, 103.2, 103.3, 103.4 entsprechen im Wesentlichen dem Bauteil 3 in Figur 1, die Bauteile 101.1, 101.2, 101.3, 101.4 dem Bauteil 1 in Figur 1. Anstelle von zwei Füßen in den Beispielen gemäß Figur 2a ist es auch möglich, einen Fahrgastsitz 100, wie in Figur 2b gezeigt, mit einem Zentralfuß 203 auszustatten. Der Zentralfuß 203 entspricht im Wesentlichen dem Stuhlfußoberteil 3 aus Figur 1. Der Zentralfuß 203 umfasst links- und rechtsseitig angeordnete Vorrichtungen, hier: Arretierprofile zum temporären Verbinden des Mittelfußes mit einer Halteschiene, wobei ein mittiger Hebel im Bereich des zentralen Fußes 203 zum Verspannen der Spannbolzen vorgesehen ist, der gabelförmig beide Arretierprofile anlenkt.

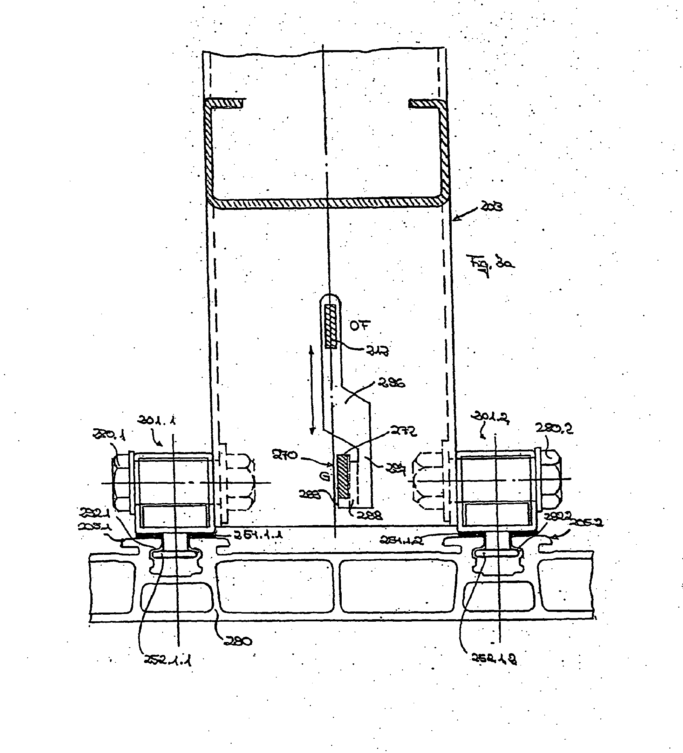

In Figur 3a ist eine Detaillansicht eines Zentralfußes 203 gemäß Figur 2b gezeigt.

Der Zentralfuß in Figur 3a ist ebenfalls mit 203 bezeichnet. Der Zentralfuß 203 ist wiederum als Stuhlfußoberteil wie das Bauteil 3 in Figur 1 ausgebildet. Links und rechts ist der Zentralfuß 203 mit Vorrichtungen zum temporären Verbinden 201.1, 201.2 des Zentralfußes 203 mit den links und rechts des Zentralfußes ausgeführten Halteschienen 205.1, 205.2 ausgestattet. Die Halteschienen 205.1, 205.2 sind in der dargestellten Ausführungsform in einem gemeinsamen Profil mit dem Fahrzeugboden 290 verbunden, beispielsweise verklebt und weisen eine T-förmige Nut 292.1, 292.2 auf. In der T-förmigen Nut werden die Führungsbolzen geführt, von denen vorliegend jeweils einer pro Arretierprofil 252.1.1, 252.1.2 dargestellt ist. Wie in Figur 3a deutlich zu erkennen, kommen die Führungsbolzen im Regelfall nicht mit der T-Nut der Halteschiene zur Anlage, sondern dienen lediglich der Führung der Vorrichtung. Zwischen der T-Nut und den Führungsbolzen wird ein Abstand eingehalten. Die beiden Arretierungsprofile liegen auf Gleitelementen 254.1.1 sowie 254.1.2 auf der jeweiligen Halteschiene auf. In der Draufsicht in Figur 3a nicht dargestellt sind die Spannbolzen sowie der Arretierbolzen. Der Arretierbolzen fällt in gespanntem Zustand in eine Öffnung der Halteschiene und verhindert ein axiales Verschieben entlang der Halteschiene des Arretierprofils. Der Spannbolzen, insbesondere mit einem Tellerteil, wird im Falle einer Arretierung nach oben gezogen und liegt somit form- und kraftschlüssig an der T-Nut der Halteschiene an.

Gegen die Halteschiene werden die Führungsbolzen nur gedrückt, falls außergewöhnliche Belastungen, wie beispielsweise ein Unfall, eintreten. In Figur 3a ebenfalls gezeigt sind zwei Stellungen OF und G des Hebelarms 212. Der Hebelarm 212, der die Arretier- und Spannbolzen beider Arretierprofile bewegt, ist in Figur 3a mit 212 bezeichnet. Die geöffnete Stellung, in der der Arretierbolzen nicht in eine Öffnung einer Halteschiene eingreift und der Spannbolzen nicht an der T-Nut der Schiene anliegt, ist mit OF bezeichnet. Um die Arretierprofile und damit den Zentralfuß mit der Halteschiene zu verspannen, wird der Hebel 212 aus der Stellung OF in die Stellung G entlang des Schlitzes 296 bewegt. Im unteren Teil des Schlitzes 296 ist die Fixiereinrichtung 270 mit Anschlag 272 gezeigt. Der Hebel 212 wird durch die Öffnung 298 in den Bereich 299 verbracht. Im Bereich 299 vollführt der Hebel 270 wieder eine Bewegung nach oben gegen den Anschlag 272. Die in die Halteschiene eingeleitete Verspannkraft wird in der geschlossenen Stellung dann von dem Anschlag 272 aufgenommen.

Im Gegensatz zu herkömmlichen Stuhlfüßen mit temporären Verbindungen zu einer Halteschiene ist vorliegend das Stuhlfußoberteil 203 mit den beiden Arretierprofilen 201.1, 201.2 nicht dauerhaft, beispielsweise mit Hilfe einer Schweißverbindung, verbunden, sondern lösbar mit Hilfe einer Schraubverbindung 280.1, 280.2. Dies hat vor allem beim Fertigen eine Reduzierung des Aufwandes zur Folge, insbesondere dann, wenn das Profil des Mittelfußes als Kantprofil ausgebildet ist.

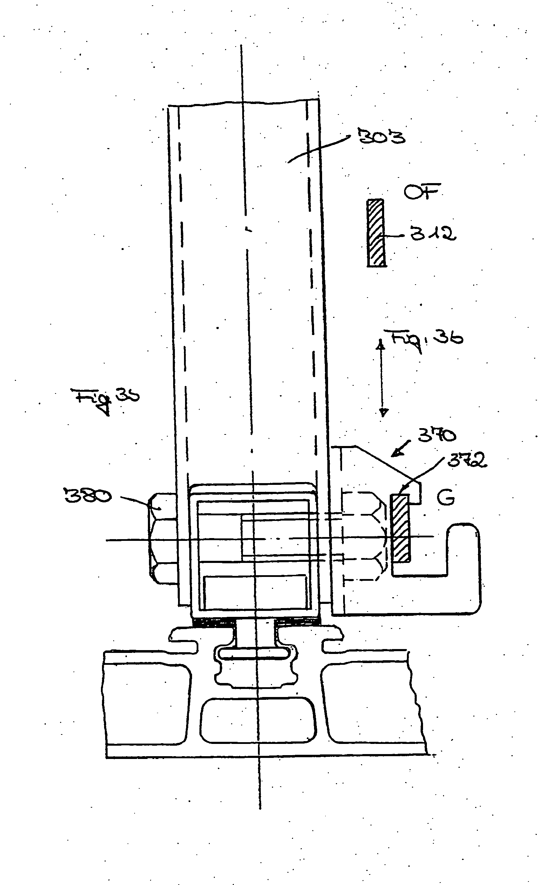

In Figur 3b ist die Ausführungsform eines Stuhlfußes dargestellt, wie er beispielsweise bei einer Anordnung gemäß Figur 2a Verwendung findet. Gleiche Bauteile wie in Figur 3a sind mit um 100 erhöhte Bezugsziffern gekennzeichnet. Im Gegensatz zu Figur 3a wird der Hebel 312 aus der Offenstellung OF in die geschlossene Stellung G nicht in einer Mittenaussparung bewegt, sondern an der Seite des Stuhlfußoberteils 303. Der Sicherung dient eine an dem Stuhlfuß 303 angebrachte Fixiereinrichtung 370, die beispielsweise in Form eines Schließbleches ausgebildet sein kann. Wie schon im Falle der Mittenführung, umfasst die Fixiervorrichtung 370 einen Anschlag 372, der in Form einer Hinterschneidung ausgebildet ist, in die der Hebel 312 in der geschlossenen Stellung einrasten kann. Wie schon im Falle von Figur 3a, ist auch bei der Ausführung gemäß Figur 3b die Arretiervorrichtung mit einer Schraube 380 mit dem Stuhlfußoberteil 303 verbunden.

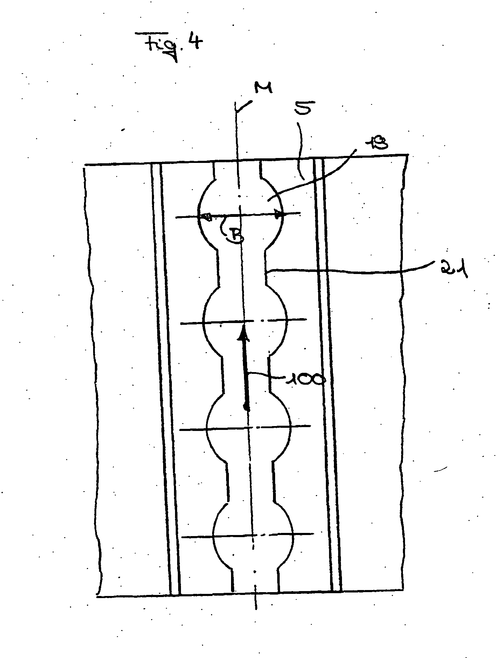

Figur 4 zeigt in Draufsicht auf eine Halteschiene 5, die in Abständen von der Mittellinie M mit Bohrungen 19 versehen sind. Die Bohrungen 19 weisen eine Breite B auf, die im Wesentlichen der Mündungsbreite der Halteschiene entspricht.

In dem Bereich 21 der Halteschiene, wird eine T-förmige Nut ausgebildet. In die Öffnungen 19 können die Führungsbolzen eingeführt werden. Das Arretierprofil (Figur 1: Bezugsziffer 1) wird dann in axialer Richtung 100 so verschoben, dass die Führungsbolzen im Bereich der T-förmigen Nut 21 zu liegen kommen. Andererseits kommt dann der Arretierbolzen direkt über einer Öffnung 19 zum Liegen. Wird der Hebel ausgelöst und der Arretierbolzen freigegeben, so fällt dieser durch die Hebelwirkung und sein Eigengewicht in eine Öffnung 19 und verhindert eine Bewegung des Arretierprofils in Längsrichtung 100 der Halteschiene. Gleichzeitig erfolgt eine Verspannung des Spannbolzens gegen die T-förmige Nut.

Der Vorgang des Verspannens ist detailliert in den Figuren 5a und 5b gezeigt. Gleiche Bauteile wie in Figur 1 sind in den Figuren 5a und 5b mit denselben Bezugsziffern bezeichnet.

Figur 5a zeigt im Schnitt Arretierprofile, wobei das Arretierprofil nicht mit der Halteschiene 5 verspannt ist. Das Arretierprofil 1 gleitet auf Gleitelementen 54.1, 54.2. Die Führungsbolzen 52.1, 52.2, 52.3, 52.4, 52.5 ragen in die Halteschiene 5 hinein. Der Spannbolzen 40 sowie der Arretierbolzen 30 werden im Arretierprofil in Aufnahmen aufgenommen 34, 44. Der Arretierbolzen umfasst einen Sprengring 46. Angelenkt wird der Arretierbolzen durch die Anlenkachse 38 sowie der Spannbolzen von der Anlenkachse 48. Die Anlenkachsen werden von der Hebeleinrichtung in axialer Richtung 32.1 bzw. 42.1 bewegt, wenn der Hebelarm nach oben in die geöffnete Stellung verbracht wird. Hierdurch wird der Arretierbolzen 30 in Richtung 32.1 angehoben und der Spannbolzen in Richtung 42.1 abgesenkt. Der Tellerrand 41 des Spannbolzens 40 liegt dann nicht mehr an der Halteschiene 5 an, d. h. es liegt keine Verspannung vor. Hierdurch bewegen sich der Arretierbolzen und der Spannbolzen in den Langlöchern 39 und 49 des Arretierprofiles. Wie in Figur 5a zu sehen ist, befindet sich im geöffneten Zustand der Arretierbolzen 30 oberhalb der Halteschiene 5, und der Spannbolzen 40 nicht in Anlage mit der Halteschiene.

Wird nunmehr der Hebel nach unten verfahren, so wird, wie in Figur 5b gezeigt, der Arretierbolzen ausgelöst und fällt, wie mit Pfeil 32.2 angedeutet, mit der Hebelbewegung nach unten. Durch die Hebelbewegung wird die Anlenkachse 38 im Langloch 39 nach unten bewegt und somit auch der Arretierbolzen 30. Im Gegensatz hierzu wird durch die Hebelbewegung die der Anlenkachse 48 des Spannbolzens 40 im Langloch 49 nach oben bewegt und der Spannbolzen kraft- und formschlüssig mit der t-förmigen Nut, der sogenannten T-Nut der Halteschiene 5 verspannt. Das Arretierprofil 5 selbst wird mit der Halteschiene hierdurch weitgehend spaltlos verspannt.

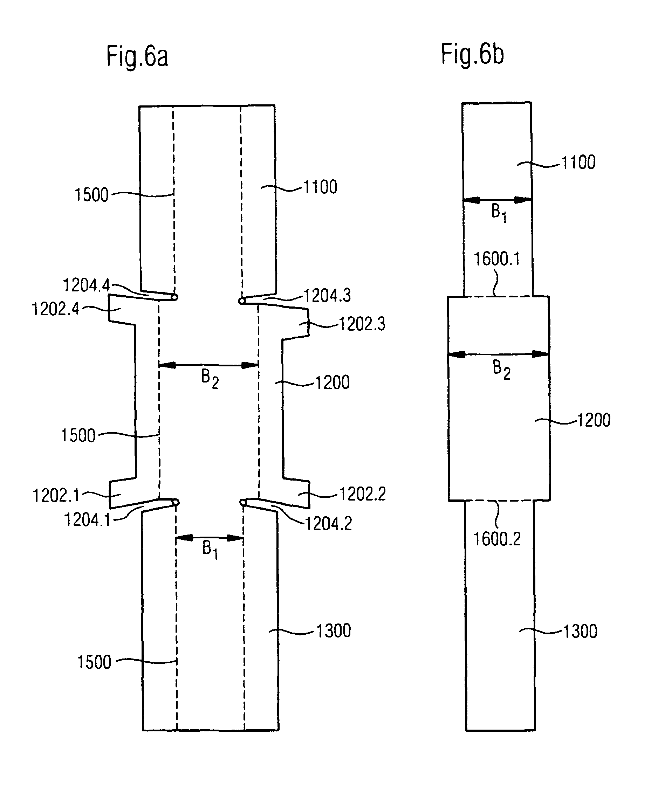

Die Figuren 6a bis 7c zeigen die Herstellung und ein daraus resultierendes Stuhlfußoberteil, das mit dem Arretierprofil lösbar oder unlösbar, bevorzugt aber lösbar mittels Schrauben verbunden ist. Das in den Figuren 6a bis 7c gezeigte Arretierprofil ist ein spezielles, nämlich ein gekantetes, einstückiges Stuhlfußoberteil

Das spezielle, in den Fig. 6a bis 7c gezeigte Stuhlfußoberteil wird aus einem einzigen Blechzuschnitt durch Kanten hergestellt. Dies ist in den Fig. 6a bis 6b gezeigt. Zunächst wird aus einem Blech ein Blechstreifen mit drei Abschnitten 1100, 1200 und 1300 herausgeschnitten. Der mittlere Abschnitt 1200 umfasst Vorsprünge 1202.1, 1202.2, 1202.3, 1202.4 sowie Einschnitte 1204.1, 1204.2, 1204.3, 1204.4, die beispielsweise durch Laser in das Blech eingebracht werden können. In einem nächsten Schritt wird das Blech entlang der Linien 1500 gekantet. Figur 6b zeigt die Draufsicht auf das gekantete Blech. Gut zu erkennen sind die Abschnitt 1100, 1200 und 1300. Die Breite B₁ der Abschnitte 1100, 1300 ist geringer als die Breite B₂ des mittleren Abschnittes 1200. Die Breite B₂ ist wenigstens, bevorzugt gerade um die zweifache Materialstärke des Bleches, aus dem die Blechstreifen zur Herstellung des Stuhlfußoberteiles herausgeschnitten werden, breiter als die Breite B₁ der Abschnitte 1100, 1300. Bevorzugt beträgt die Materialstärke s des Bleches zwischen 2 mm und 5 mm, bevorzugt 3 mm.

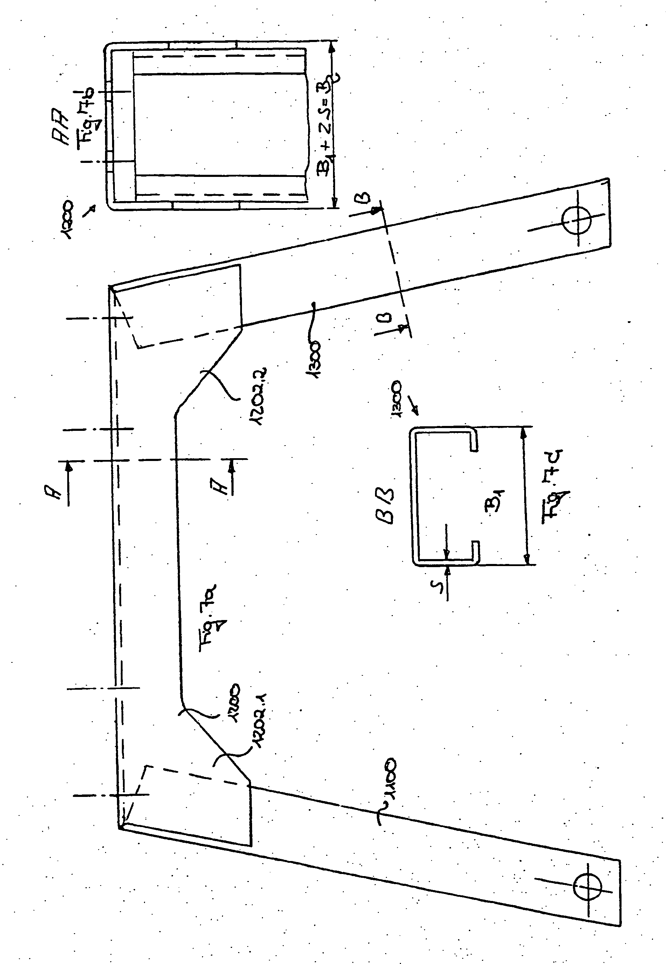

In einem weiteren Verfahrensschritt wird nunmehr das in Figur 6b in der Draufsicht gezeigte einstückige Blechteil, entlang der Linien 1600.1, 1600.2 nochmals gekantet, so dass sich das in Figur 7a in der Seitenansicht gezeigte Stuhltfußoberteil ergibt. Die einzelnen Abschnitte des einstückigen Stuhltfußoberteiles, nämlich die Abschnitte 1100, 1300 sowie der Mittenabschnitt 1200 sind mit denselben Bezugsziffern belegt.

Um das aus dem Blechteil hergestellte einstückige Stuhlfußoberteil gemäß den Figuren 6a bis 6b zu stabilisieren, kann vorgesehen sein, im Bereich der Vorsprünge 1202.1, 1202.2 den Abschnitt 1100, 1300 mit dem Mittenabschnitt 1200 fest zu verbinden, beispielsweise , durch Schweißen, durch Preßfügen oder aber auch durch Verschrauben.

Die Figuren 7b und 7c zeigen Schnitte durch das Stuhlfußoberteil. Figur 7b zeigt einen Schnitt A-A, Figur 7c einen Schnitt B-B.

Deutlich zu erkennen ist in Figur 7b (Schnitt A-A) das gekantete Profil. Die Materialstärke des Profils beträgt s. Die Gesamtbreite B₂ im Abschnitt 1200 ist die Breite B₁ + 2s, wobei B₁ die Breite des Abschnittes 1100 bzw. 1300 ist, wie in Fig. 6b gezeigt bzw. im Schnitt B-B (Figur 7c) angegeben und s die Materialstärke.

Das einstückige Stuhlfußoberteil, wie in den Figuren 6a bis 7c gezeigt, zeichnet sich durch ein sehr einfaches Herstellverfahren aus. Selbstverständlich ist dies nur eine Variante eines Stuhlfußoberteils. Möglich wären auch Stuhlfußoberteile, bei denen unterschiedliche Abschnitte aneinandergeschweißt werden. Ein derartiges Stuhlfußoberteil wäre dann nicht mehr ein einstückiges Bauteil, das aus einem einzigen Blechteil durch Kanten hergestellt werden kann, sondern ein mehrstückiges Stuhlfußoberteil.

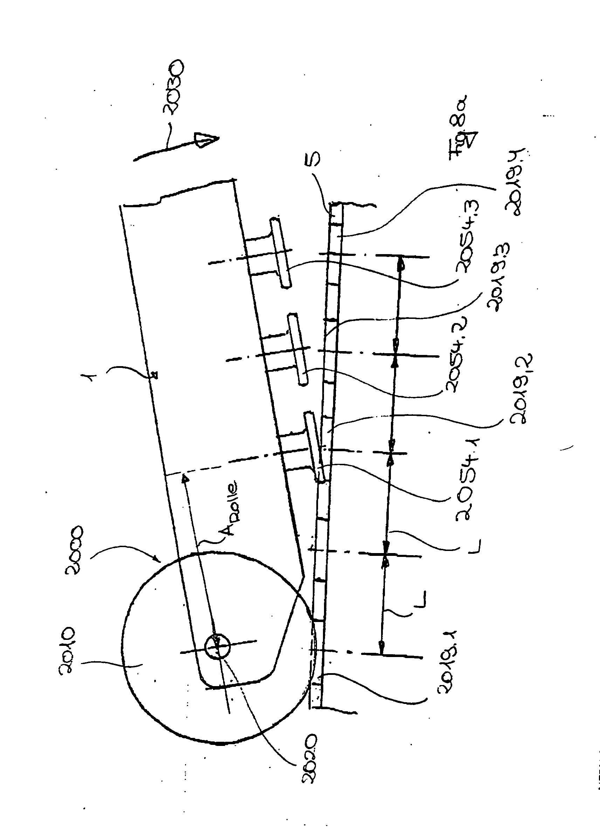

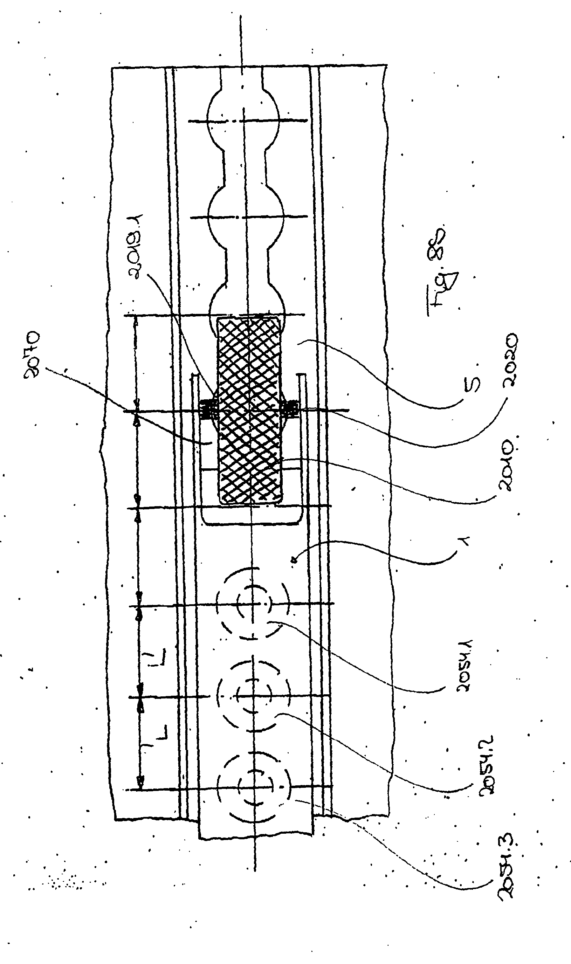

In den Figuren 8a und 8b ist eine Ausführungsform der Erfindung gezeigt, bei der ein Arretierprofil 1, wie es beispielsweise auch in Fig. 1 gezeigt ist, an einem Ende 2000 mit einer Transportrolle 2010 ausgestattet ist.

Das Ende des Arretierprofils 2000 ist zur Aufnahme der Transportrolle 2010 gabelförmig ausgebildet.

Mit Hilfe der Transportrolle 2010 ist es möglich, im ausgebauten Zustand (nicht dargestellt) das Arretierprofil mit daran angebautem Stuhlfuß und am Stuhlfuß angeschraubter Fahrzeugbank einfach bewegen zu können.

Der Abstand A_{Rolle} des Mittelpunkts 2020 der Transportrolle 2010 vom ersten Führungsbolzen 2054.1, der am Arretierprofil 1 angeordnet ist, ist so gewählt, dass wenn die Transportrolle 2010 des Arretierprofils 1 in eine erste Öffnung bzw. Bohrung 2019.1 der Halteschiene eingesetzt wird und in Richtung 2030 abgeklappt wird, die Führungsbolzen 2054.1, 2054.2, 2054.3 in die ihnen zugeordneten Öffnungen bzw. Bohrungen 2019.2, 2019.3, 2019.4 eingeführt werden. Die Lage der Führungsbolzen 2054.1, 2054.2, 2054.3 relativ zu den Bohrungen 2019.2, 2019.3 und 2019.4 ist bei der dargestellten Ausführungsform bereits bestimmt. Die Transportrolle 2010 übernimmt somit eine Indexierungs- bzw. Suchfunktion für die Führungsbolzen.

Der Abstand der jeweiligen Öffnungen bzw. Führungslöcher ist regelmäßig und beträgt, wie eingezeichnet, L.

In Fig. 8b ist eine Draufsicht auf eine Anordnung gemäß Fig. 8a gezeigt. Gleiche Bauteile sind wiederum mit denselben Bezugsziffern belegt. Wie aus der Draufsicht hervorgeht, ist durch das Verbringen der Führungsrolle 2010 in die Bohrung 2019.1 die Lage der Führungsbolzen 2054.1, 2054.2, 2054.3 über den jeweiligen ihnen zugeordneten Öffnungen bzw. Bohrungen gegeben. Gut zu erkennen ist in der Draufsicht gemäß Fig. 8b die gabelförmige Ausgestaltung des Arretierprofils im Endbereich. In die Ausnehmung 2070 des Arretierprofils ist die Transportrolle 2010 eingesetzt, wobei die Drehachse 2020, in die die Transportrolle drehbar ausgelegt ist, deutlich zu erkennen ist.

Mit der Erfindung wird erstmals eine Vorrichtung angegeben, bei der es auf einfache Art und Weise möglich ist, einen bewegbaren Gegenstand sicher in einer Halteschiene zu befestigen, dort zu verriegeln und wieder auf einfache Art und Weise zu entriegeln, insbesondere durch eine reine Fußbetätigung. Ein Vorteil neben dem sicheren Verbinden ist auch, dass der Verriegelungs- und Entriegelungsmechanismus mittels einer Hebeleinrichtung derart ausgebildet ist, dass er alleine durch eine Fußbetätigung betätigt werden kann.

Die Erfindung umfasst Aspekte, die in den nachfolgenden Sätzen niedergelegt sind, die Teil der Beschreibung sind, aber keine Sätze in Übereinstimmung mit der Entscheidung J 15/88 der Beschwerdekammer.
1. Vorrichtung zum zeitweiligen Verbinden eines bewegbaren Gegenstandes, insbesondere eines Fahrzeugsitzes mit einer Längsnuten aufweisenden Halteschiene, wobei die Vorrichtung mehrere nach unten ragende Führungsbolzen umfasst, die in der Halteschiene geführt werden sowie einen axial verschiebbaren Arretierbolzen und einen axial verschiebbaren Spannbolzen, der in Abstand zum Arretierbolzen angeordnet ist, zum Eingriff in die Halteschiene
   **dadurch gekennzeichnet, dass**
   der Arretierbolzen und der Spannbolzen durch eine Hebeleinrichtung gemeinsam axial verstellbar sind.
2. Vorrichtung gemäß Satz 1,
   **dadurch gekennzeichnet, dass**
   Arretierbolzen und Spannbolzen mit Hilfe der Hebeleinrichtung in die entgegengesetzte Richtung bewegt werden.
3. Vorrichtung nach einem der Sätze 1 oder 2,
   **dadurch gekennzeichnet, dass**
   die Hebeleinrichtung wenigstens einen um einen Drehpunkt verschwenkbaren Hebelarm umfasst.
4. Vorrichtung nach einem der Sätze 1 bis 3, **dadurch gekennzeichnet, dass** der Hebelarm ein Bedienpedal umfasst.
5. Vorrichtung nach einem der Sätze 1 bis 4, **dadurch gekennzeichnet, dass** die Hebeleinrichtung derart ausgestaltet ist, dass eine Entriegelung und eine Verriegelung des bewegbaren Gegenstandes mit der Halteschiene alleine durch eine Fußbetätigung, insbesondere des Bedienpedales, erfolgt.
6. Vorrichtung nach einem der Sätze 3 bis 5,
   **dadurch gekennzeichnet, dass** der Hebelarm über Anlenkachsen den in axialer Richtung verschiebbaren Spannbolzen und den Arretierbolzen anlenkt, wobei die Anlenkachse für den Arretierbolzen vor dem Drehpunkt des Hebelarms und die Anlenkachse für den Spannbolzen hinter dem Drehpunkt des Hebelarms angeordnet ist.
7. Vorrichtung nach einem der Sätze 3 bis 6,
   **dadurch gekennzeichnet, dass**
   der Hebelarm derart ausgebildet ist, dass der Hebelarm in eine arretierte Stellung verbracht werden kann, bei der der Spannbolzen kraft- und formschlüssig mit der Halteschiene verspannt wird.
8. Vorrichtung gemäß einem der Sätze 1 bis 7,
   **dadurch gekennzeichnet, dass**
   die Vorrichtung eine Schließeinrichtung umfasst, die den Hebelarm in der arretierten Stellung mit einer Fixiereinrichtung fixiert.
9. Vorrichtung nach Satz 8,
   **dadurch gekennzeichnet, dass**
   die Fixiereinrichtung ein Schließblech mit Anschlag ist.
10. Vorrichtung nach einem der Sätze 1 bis 9, **dadurch gekennzeichnet, dass** zu einem Lösen des Hebelarmes gleichzeitig eine Kraft nach unten, insbesondere in Richtung der Halteschiene und seitlich, insbesondere parallel zur Halteschiene ausgeübt werden muss.
11. Vorrichtung nach einem der Sätze 1 bis 10,
   **dadurch gekennzeichnet, dass** die Vorrichtung ein Arretierprofil mit Aufnahmen umfasst, wobei die eine Aufnahme den Arretierbolzen und die andere Aufnahme den Spannbolzen aufnimmt und der Arretierbolzen und der Spannbolzen in der jeweiligen Aufnahme axial bewegbar ist.
12. Vorrichtung nach Satz 11,
   **dadurch gekennzeichnet, dass**
   der Arretierbolzen einen Sprengring umfasst, mit dem der Arretierbolzen in der Aufnahme gehalten werden kann, wenn sich der Hebelarm in einer geöffneten Stellung befindet.
13. Vorrichtung nach einem der Sätze 1 bis 12,
   **dadurch gekennzeichnet, dass**
   die Vorrichtung wenigstens eine Gleiteinrichtung umfasst.
14. Vorrichtung nach einem der Sätze 1 bis 13,
   **dadurch gekennzeichnet, dass**
   die Vorrichtung durch ein Stuhlfußoberteil umfasst wird..
15. Vorrichtung nach Satz 14,
   **dadurch gekennzeichnet, dass**
   das Stuhlfußoberteil lösbar mit dem Arretierprofil verbunden ist.
16. Vorrichtung nach einem der Sätze 14 bis 15,
   **dadurch gekennzeichnet, dass**
   das Stuhlfußoberteil ein gekantetes Blechprofil umfasst.
17. Vorrichtung nach Satz 16,
   **dadurch gekennzeichnet, dass**
   das gekantete Profil einstückig ausgebildet ist.

## Patentansprüche

1. Vorrichtung zum zeitweiligen Verbinden eines bewegbaren Gegenstandes (3), insbesondere eines Fahrzeugsitzes mit einer Längsnuten (62) aufweisenden Halteschiene (5), wobei die Vorrichtung mehrere nach unten ragende Führungsbolzen (52.1, 52.2, 52.3, 52.4) umfasst, die in der Halteschiene (5) geführt werden sowie einen axial verschiebbaren Arretierbolzen (30) und einen axial verschiebbaren Spannbolzen (40), der in Abstand zum Arretierbolzen (30) angeordnet ist, zum Eingriff in die Halteschiene (5), wobei
der Arretierbolzen (30) und der Spannbolzen (40) durch eine Hebeleinrichtung (10) gemeinsam axial verstellbar sind,
**dadurch gekennzeichnet, dass**
die Hebeleinrichtung (10) einen um einen Drehpunkt verschwenkbaren Hebelarm (12) umfasst, wobei der Hebelarm (12) über Anlenkachsen (38, 48) den in axialer Richtung (32.1, 42.1) verschiebbaren Arretierbolzen (30) und den Spannbolzen (40) anlenkt und die Anlenkachse (38) für den Arretierbolzen (30) vor dem Drehpunkt (14) und die Anlenkachse (48) für den Spannbolzen (40) hinter dem Drehpunkt (14) des Hebelarms (12) angeordnet sind, so dass
Arretierbolzen (30) und Spannbolzen (40) mit Hilfe des Hebelarmes (12) in entgegen gesetzte Richtungen bewegt werden.

2. Vorrichtung nach Anspruch 1, **dadurch gekennzeichnet, dass** die Vorrichtung derart ausgestaltet ist, dass im Fall der Arretierung der Spannbolzen (40) form- und kraftschlüssig an den Längsnuten (62) der Halteschiene anliegen und die Führungsbolzen einen Abstand zu den Längsnuten (62) der Halteschiene (5) aufweisen.

3. Vorrichtung nach Anspruch 1,
**dadurch gekennzeichnet, dass**
der Hebelarm (12) ein Bedienpedal umfasst.

4. Vorrichtung nach einem der Ansprüche 1 bis 3,
**dadurch gekennzeichnet, dass**
der Hebelarm (12) derart ausgestaltet ist, dass eine Entriegelung und eine Verriegelung des bewegbaren Gegenstandes (3) mit der Halteschiene (5) alleine durch eine Fußbetätigung, insbesondere des Bedienpedales, erfolgt.

5. Vorrichtung gemäß einem der Ansprüche 1 bis 4,
**dadurch gekennzeichnet, dass**
die Vorrichtung eine Schließeinrichtung umfasst, die den Hebelarm (12) in der arretierten Stellung mit einer Fixiereinrichtung (270) fixiert.

6. Vorrichtung nach Anspruch 5,
**dadurch gekennzeichnet, dass**
die Fixiereinrichtung (270) ein Schließblech mit Anschlag (272) ist.

7. Vorrichtung nach einem der Ansprüche 1 bis 6,
**dadurch gekennzeichnet, dass**
zu einem Lösen des Hebelarmes (12) gleichzeitig eine Kraft nach unten, insbesondere in Richtung der Halteschiene (5) und seitlich, insbesondere parallel zur Halteschiene (5) ausgeübt werden muss.

8. Vorrichtung nach einem der Ansprüche 1 bis 7,
**dadurch gekennzeichnet, dass**
die Vorrichtung ein Arretierprofil mit Aufnahmen (34, 44) umfasst, wobei die eine Aufnahme (34) den Arretierbolzen (30) und die andere Aufnahme (44) den Spannbolzen (40) aufnimmt und der Arretierbolzen (30) und der Spannbolzen (40) in der jeweiligen Aufnahme (34, 44) axial bewegbar ist.

9. Vorrichtung nach Anspruch 8,
**dadurch gekennzeichnet, dass**
der Arretierbolzen (30) einen Sprengring (46) umfasst, mit dem der Arretierbolzen (30) in der Aufnahme (34) gehalten werden kann, wenn sich der Hebelarm (12) in einer geöffneten Stellung (OF) befindet.

10. Vorrichtung nach einem der Ansprüche 1 bis 9,
**dadurch gekennzeichnet, dass**
die Vorrichtung wenigstens eine Gleiteinrichtung (54.1, 54.2) umfasst.

11. Vorrichtung nach einem der Ansprüche 1 bis 10,
**dadurch gekennzeichnet, dass**
die Vorrichtung eine Rolle (2010) aufweist, die derart angeordnet sind, dass beim Einsetzen in die Halteschiene (5) und einem Abkippen der Vorrichtung über die Rollen die Führungsbolzen (2054.1, 2054.2, 2054.3) in Bezug auf die Öffnungen (2019.1, 2019.2, 2019.3, 2019.4) der Halteschiene (5) positioniert bzw. indexiert werden.

12. Vorrichtung nach Anspruch 11,
**dadurch gekennzeichnet, dass**
die Rolle (2010) am Ende eines Arretierprofils der Vorrichtung angeordnet ist.

## Claims

1. An apparatus for the temporary connection of a movable object (3), especially a vehicle seat with a holding rail (5) having longitudinal grooves (62), with the apparatus comprising several downwardly protruding guide bolts (52.1, 52.2, 52.3, 52.4) which are guided in the holding rail (5), and an axially displaceable locking bolt (30) and an axially displaceable clamping bolt (40), which is arranged at a distance from the locking bolt (30), for the engagement in the holding rail (5), with the locking bolt (30) and the clamping bolt (40) being jointly axially adjustable by a lever device (10), **characterized in that** the lever device (10) comprises a lever arm (12) which can be pivoted about a pivot point, with the lever arm (12) linking the locking bolt (30) displaceable in the axial direction (32.1, 42.1) and the clamping bolt (40) via articulated axes (38, 48), and with the articulated axis (38) for the locking bolt (30) being arranged before the pivot point (14) and the articulated axis (48) for the clamping bolt (40) being arranged behind the pivot point (14) of the lever arm (12), so that the locking bolt (30) and the clamping bolt (40) are moved in opposite directions by means of the lever arm (12).

2. An apparatus according to claim 1, **characterized in that** the apparatus is arranged in such a way that in the case of locking the clamping bolts (40) rest in a positive or non-positive manner on the longitudinal grooves (62) of the holding rail and the guide bolts have a distance from the longitudinal grooves (62) of the holding rail (5).

3. An apparatus according to claim 1, **characterized in that** the lever arm (12) comprises an operating pedal.

4. An apparatus according to one of the claims 1 to 3, **characterized in that** the lever arm (12) is arranged in such a way that unlocking and locking of the movable object (3) with the holding rail (5) occurs solely by actuation by foot, especially the operating pedal.

5. An apparatus according to one of the claims 1 to 4, **characterized in that** the apparatus comprises a closing device which fixes the lever arm (12) in the locked position with a fixing device (270).

6. An apparatus according to claim 5, **characterized in that** the fixing device (270) is a closing plate with a stop (272).

7. An apparatus according to one of the claims 1 to 6, **characterized in that** for releasing the lever arm (12) it is necessary to simultaneously exert a force downwardly, especially in the direction of the holding rail (5), and laterally, especially parallel to the holding rail (5).

8. An apparatus according to one of the claims 1 to 7, **characterized in that** the apparatus comprises a locking profile with receivers (34, 44), with the one receiver (34) accommodating the locking bolt (30) and the other receiver (44) the clamping bolt (40), and the locking bolt (30) and the clamping bolt (40) are axially movable in the respective receiver (34, 44).

9. An apparatus according to claim 8, **characterized in that** the locking bolt (30) comprises a snap ring (46) with which the locking bolt (30) can be held in the receiver (34) when the lever arm (12) is in an open position (OF).

10. An apparatus according to one of the claims 1 to 9, **characterized in that** the apparatus comprises at least one sliding device (54.1, 54.2).

11. An apparatus according to one of the claims 1 to 10, **characterized in that** the apparatus comprises a roller (2010) which is arranged in such a way that during the insertion into the holding rail (5) and a tilting of the apparatus via the rollers the guide bolts (2054.1, 2054.2, 2054.3) are positioned or indexed with respect to the openings (2019.1, 2019.2, 2019.3, 2019.4) of the holding rail (5).

12. An apparatus according to claim 11, **characterized in that** the roller (2010) is arranged at the end of a locking profile of the apparatus.

## Revendications

1. Mécanisme pour l'assemblage temporaire d'un objet mobile (3), en particulier d'un siège de véhicule, avec un rail de fixation (5) présentant des gorges longitudinales (62), lequel mécanisme comprend plusieurs boulons de guidage (52.1, 52.2, 52.3, 52.4) dépassant vers le bas qui sont guidés dans le rail de fixation (5), ainsi qu'un boulon de blocage (30) déplaçable dans le sens axial et un boulon de serrage (40) déplaçable dans le sens axial qui est disposé à distance du boulon de blocage (30), pour se mettre en prise dans le rail de fixation (5),
dans lequel le boulon de blocage (30) et le boulon de serrage (40) sont réglables ensemble dans le sens axial à l'aide d'un dispositif de levier (10),
**caractérisé en ce que** le dispositif de levier (10) comprend un bras de levier (12) pouvant pivoter autour d'un point de rotation, le bras de levier (12) articulant à l'aide d'axes d'articulation (38, 48) le boulon de blocage (30) déplaçable dans le sens axial (32.1, 42.1) et le boulon de serrage (40), et l'axe d'articulation (38) pour le boulon de blocage (30) étant disposé devant le point de rotation (14) et l'axe d'articulation (48) pour le boulon de serrage (40) derrière le point de rotation (14) du bras de levier (12), de telle sorte que le boulon de blocage (30) et le boulon de serrage (40) sont déplacés dans des directions opposées à l'aide du bras de levier (12).

2. Mécanisme selon la revendication 1, **caractérisé en ce que** le mécanisme est conçu de telle manière qu'en cas de blocage le boulon de serrage (40) repose en engagement positif et par friction sur les gorges longitudinales (62) du rail de fixation et les boulons de guidage se trouvent à distance des gorges longitudinales (62) du rail de fixation (5).

3. Mécanisme selon la revendication 1, **caractérisé en ce que** le bras de levier (12) comprend une pédale de commande.

4. Mécanisme selon l'une des revendications 1 à 3, **caractérisé en ce que** le bras de levier (12) est conformé de telle manière que l'objet mobile (3) est déverrouillé et verrouillé avec le rail de fixation (5) simplement par un actionnement au pied, en particulier celui de la pédale de commande.

5. Mécanisme selon l'une des revendications 1 à 4, **caractérisé en ce que** le mécanisme comprend un dispositif de fermeture qui fixe le bras de levier (12) dans la position bloquée avec un dispositif de fixation (270).

6. Mécanisme selon la revendication 5, **caractérisé en ce que** le dispositif de fixation (270) est une nappe de pêne avec une butée (272).

7. Mécanisme selon l'une des revendications 1 à 6, **caractérisé en ce que** pour défaire le bras de levier (12), il faut exercer simultanément un effort vers le bas, en particulier dans le sens du rail de fixation (5), et latéralement, en particulier parallèlement au rail de fixation (5).

8. Mécanisme selon l'une des revendications 1 à 7, **caractérisé en ce qu'**il comprend un profilé de blocage avec des réceptacles (34, 44), un réceptacle (34) recevant le boulon de blocage (30) et l'autre réceptacle (44) le boulon de serrage (40), et le boulon de blocage (30) et le boulon de serrage (40) étant mobiles dans le sens axial dans leurs réceptacles (34, 44) respectifs.

9. Mécanisme selon la revendication 8, **caractérisé en ce que** le boulon de blocage (30) comprend un circlip (46) avec lequel le boulon de blocage (30) peut être retenu dans le réceptacle (34) quand le bras de levier (12) se trouve dans une position ouverte (OF).

10. Mécanisme selon l'une des revendications 1 à 9, **caractérisé en ce que** le mécanisme comprend au moins un dispositif coulissant (54.1, 54.2).

11. Mécanisme selon l'une des revendications 1 à 10, **caractérisé en ce que** le mécanisme présente un galet (2010) qui est disposé de telle manière que lors de l'insertion dans le rail de fixation (5) et du basculement du mécanisme par-dessus les galets, les boulons de guidage (2054.1, 2054.2, 2054.3) sont positionnés ou alignés par rapport aux ouvertures (2019.1, 2019.2, 2019.3, 2019.4) du rail de fixation (5).

12. Mécanisme selon la revendication 11, **caractérisé en ce que** le galet (2010) est disposé à l'extrémité d'un profilé de blocage du mécanisme.
